# EUROPEAN PATENT SPECIFICATION

(11) **EP 1 112 629 B1**
(45) Date of publication and mention of the grant of the patent: **13.11.2002**
(21) Application number: 99941679.5
(22) Date of filing: 07.09.1999
(51) Int. Cl.: H04B 7/26

(54) **A METHOD AND A SYSTEM FOR DETECTING COMMUNICATION RELAYING NETWORK ELEMENTS**
VERFAHREN UND SYSTEM ZUR DETEKTIERUNG VON KOMMUNIKATIONSWEITERLEITUNGS-NETZWERKELEMENTEN
DETECTION D'ELEMENTS DE RESEAU RELAIS ET SYSTEME A CET EFFET

(30) Priority: 08.09.1998 FI 981920
(43) Date of publication of application: 04.07.2001
(73) Proprietor: Nokia Corporation, 02150 Espoo (FI)
(72) Inventor: SUONVIERI, Jukka, FIN-33610 Tampere (FI)
(74) Representative: Pelin, Torolf
(86) International application number: FI9900724
(87) International publication number: WO00014906

(56) References cited:
- WO-A-96/07250
- WO-A-96/16522

## Description

The present invention refers to a method for detecting communication relaying network elements in cellular communication networks as stated in the preamble of the appended independent claim 1. The present invention also refers to a system for detecting communication relaying network elements in cellular communication networks as stated in the preamble of the appended independent claim 13. Further the present invention also refers to a network element for cellular communication network as stated in the preamble of the appended independent claim 18.

To offer better services to their customers the operators of cellular communication networks are placing increasing numbers of base stations or Base Transceiver Stations (BTS) inside buildings, so that customers using their mobile phones and other mobile communication equipment have acceptable quality of service also indoors. It is quite typical to configure these indoor base stations so that a cell covering only one floor or even a single room of a building is formed. The cells used in cellular communication networks are classified as macro-, micro- and even picocells according to the size of the coverage area of a cell. The size of indoor cells mentioned above are typically under 100 m placing them in the microcell category.

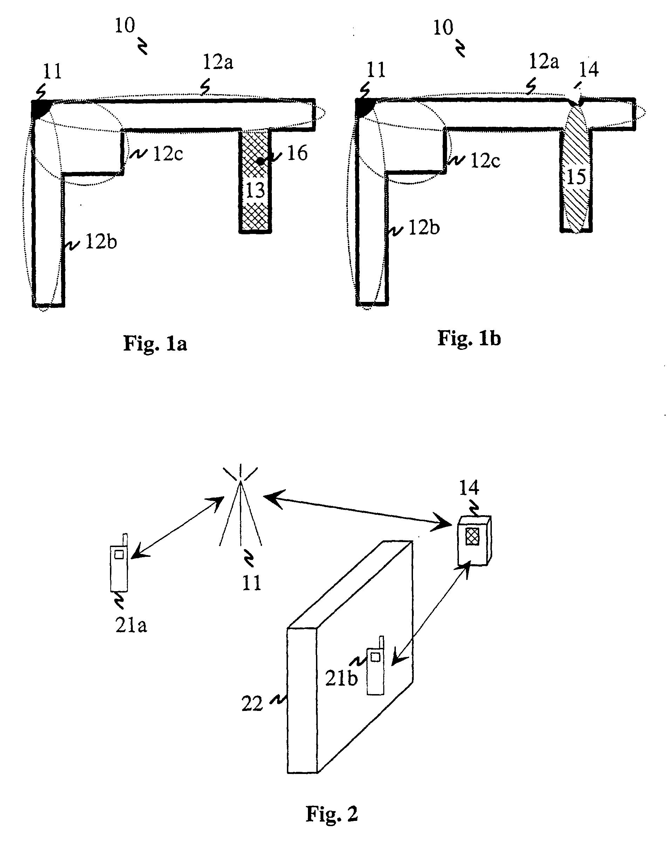

In figure 1a a floor plan 10 of a typical office building is shown. A base station 11 is placed inside the building so that a micro cell consisting three sectors 12a, 12b and 12c is formed.

As there are typically many walls and other obstacles that hinder the propagation of electromagnetic waves inside a building, dead zones, like the zone 13 shown in figure 1a, are formed. A mobile station 16 in a dead zone 13 can not establish communication with the base station 11 or even if the connection can be made, the quality of the connection is poor. To eliminate these dead zones, radio repeaters that are used as relay stations between the mobile station 16 and the base station 11, are placed in locations where they can receive the communication from the mobile station 16 in a dead zone 13 of a base station 11 and where they can relay these communications to the base station 11. Naturally communications from the base station to the mobile station can also be carried out with similar fashion.

In figure 1b a floor plan identical to the floor plan in figure 1a is shown. However, in figure 1b a radio repeater 14 is placed so that the coverage area 15 of the radio repeater 14 covers the dead zone 13 of the base ration 11, shown in figure 1a.

In figure 2 it is shown how a mobile station 21b, situated behind an obstacle 22 in a dead zone of the base station 11 communicates with the base station 11 via a radio repeater 14. When a mobile station 21b is used, the radio repeater 14 receives the communication and transmits it to the base station 11, typically using the same channel, although in some cases the use of channel changing radio repeaters are preferred. Accordingly the communication from the base station 11 is relayed via the radio repeater 14 to the mobile station 21b. Communications between the base station 11 and a second mobile station 21a that is within the coverage area of the base station are performed directly without radio repeater 14.

A basic radio repeater consists of a receiving and a transmitting section with at least two antennas, one covering the dead zone of the base station and another to carry out the communication with the base station. A typical use of radio repeaters is just to relay the received communications in a same channel, both downlink from the base stations to the mobile station and uplink from the mobile station to the base station. For economical reasons there is no sophisticated monitoring equipment usually included in the radio repeaters. Therefore in the prior art there is no way of getting any information about the operation of the radio repeaters to the network management system. This can cause situations where a radio repeater can be out of operation without the operator knowing it before receiving complaints from customers who have noticed that they have a dead zone in some area.

For the man skilled in the art an obvious solution to get more information about the function of radio repeaters would be to include sophisticated monitoring equipment in a radio repeater. This equipment could then be connected directly or through the base station to the network management system. This solution would however mean a considerable increase in the manufacturing cost of the radio repeater.

The document WO 96/07250 describes various problems and arrangements regarding repeaters. However, those arrangements do not provide solutions for the present problems.

An object of the present invention is to provide a new method for detecting communication relaying network elements, like radio repeaters. The method can be utilised without any monitoring equipment in the element itself thus eliminating the above stated problems of the prior art.

A further object of the present invention is to provide a new system for detecting communication relaying network elements, like radio repeaters. The system can be utilised without any monitoring equipment in the element itself.

A further object of the present invention is to provide a new network element comprising a system for detecting communication relaying network elements, like radio repeaters. Current network elements can be converted to the network elements according the invention with software modifications making the conversion easy and economically feasible.

The above stated objects are achieved by monitoring the time delay between a mobile station and a base station to determine if the communication is relayed via at least one relay element or performed directly with the base station. The communications from a mobile station performed via at least one relay element are detected by the increase of time delay compared to the time delay of mobile stations communicating directly with the base station.

More specifically the above stated objects are achieved by the means of a method, a system and a network element which are characterised by what is stated in the characterizing portions of the appended independent claims 1, 13 and 18. Preferred embodiment of the invention are described in dependent claims.

Compared to the prior art, the present invention gives significant advantages. When the information coming via a relay element can be recognised, it is possible to get information about the operation of relay elements to the operator, for example through the network management system (NMS). This gives the operator more complete understanding about the network and assists the operator to identify possible problems caused by relay elements, thus enabling the operator to improve the quality of the service offered to the customers.

The present invention is also quite simple and economical to implement to the present cellular networks as there is no need for additional hardware, neither for base station nor to relay elements. The method according the present invention can be implemented with only software modifications to present cellular communications networks.

The present invention will now be described more in detail in the following with the reference to the accompanying drawing, in which
- Figs. 1a and 1b: show schematically how a dead zone of a base station can be covered with a use of a radio repeater,
- Fig. 2: shows schematically the use of radio repeaters in cellular communication networks,
- Figs. 3a and 3b: show schematically the reception and transmission cycles of GSM-mobile station located close to and far from a base station,
- Fig. 4: shows a flow chart of an embodiment of the method according the present invention,
- Fig. 5: shows schematically the use of optical tunnelling in cellular communication networks,
- Fig. 6: shows a distribution of communications as a function of time delay, and
- Figs. 7a and 7b: show network elements comprising a system according the present invention.

Figs. 1 and 2 have been discussed above in context of the prior art.

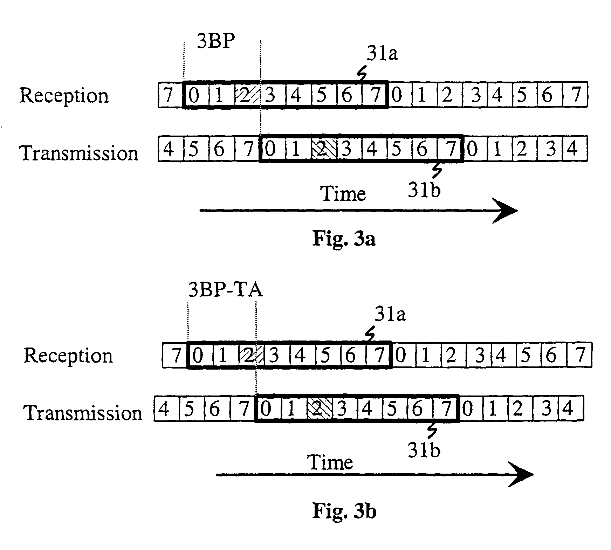

In fig 3a a structure of reception and transmission frames of a GSM mobile station located close to the base station is shown. As stated in the GSM standard the transmission frame 31b has been delayed from the reception frame 31a by three burst periods (BP) [1]. In fact, the convention is that the numbering of the uplink slots (transmission of the mobile station ) is derived from that of the downlink (reception of the mobile station) ones by a shift of 3 burst periods [1]. As the transmission and reception of the mobile phone is done with the same slot number, slot 2 in fig. 3a, this allows mobile station to avoid emitting and receiving simultaneously, thereby promoting easier implementation, when the receiver in the mobile station need not be protected from the emitter of the same mobile station.

When the mobile station is far from the base station the propagation delays between a mobile station and a base station are no more negligible compared to the burst duration. As the base station may have to handle communications with several mobile stations simultaneously it is imperative that the bursts from each mobile station are received in correct time slots. Otherwise the bursts coming from different mobile stations could overlap resulting poor transmission quality. This has been solved in present networks by controlling the time delay between the reception and transmission frames of the mobile station. This is done using timing advance (TA).

In figure 3b it is shown how the timing advance is used in determining the time delay between reception and transmission cycles of mobile station. When a base station, a base station controller (BSC) or another entity for determining the timing advance has determined a proper timing advance value for example using methods explained in reference [1] pages 346-349, the timing advance value is sent to the mobile station using methods also known *per se*. When the mobile station receives a timing advance value, it advances the transmission of its transmission slot by the amount indicated by the timing advance value. Therefore, from the point of view of the mobile station the time difference between the downlink frame 31a and the uplink frame 31b is no more three times the burst period (BP), as in fig. 3a, but three times the burst period (BP) minus the timing advance (TA) indicated by the received timing advance value, as in fig 3b.

It is evident from what was explained above that the timing advance is increased, when the propagation delay between the base station and the mobile station is increased. When a mobile station is closer than 500 m to a base station in a GSM network environment the propagation delays between the base station and the mobile station are negligible, resulting in a zero timing advance. This is the case for a mobile station located in a microcell, which are by definition quite small. The situation changes when the communication is relayed via a relay element like a radio repeater in figure 2. The radio repeater causes some delay for the communications between a mobile station and a base station. The base station can observe the presence of a radio repeater from an increase of the timing advance. It is quite typical that timing advance of a mobile station communicating with the base station via a radio repeater will correspond to a timing advance caused by a distance of several kilometres. In a microcell environment where maximum actual distances where mobile station can be situated and still be able to communicate with the base station is typically only a few hundred meters. Therefore it is possible to use the timing advance value for determining if the communication between a mobile station and a base station is performed via a radio repeater or any other delay causing network elements.

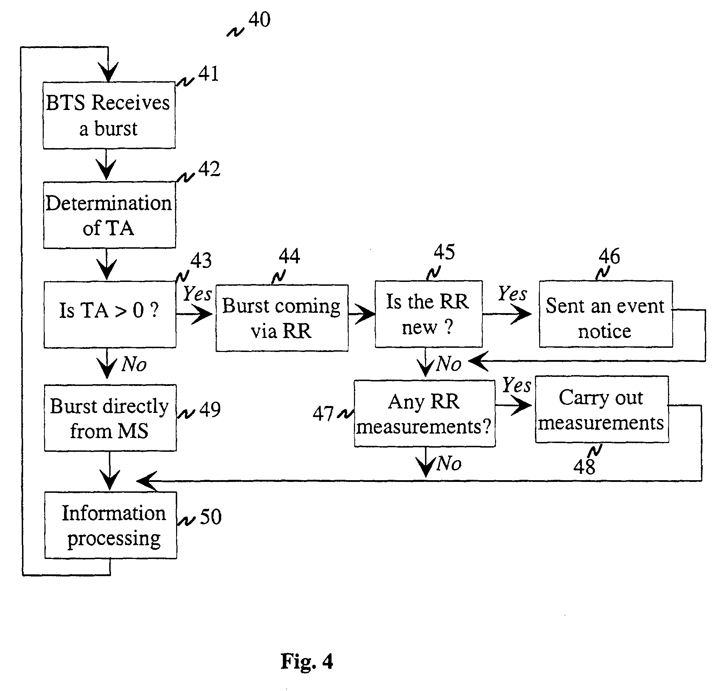

In fig 4 a flow chart of an embodiment of a method according the present invention is presented. In the step 41 a base transceiver station (BTS) receives a transmission transmitted by a mobile station. This transmission is in typically a burst containing digitised information, like in GSM networks. The burst can be normal data burst, an access burst or any other kind of information that can be used to determine the timing advance of a mobile station.

In the step 42 the timing advance (TA) is determined by a base transceiver station, a base station controller (BSC), or another entity which determines the timing advance. Timing advance can be expressed in microseconds or a timing advance value with an integer value (typically 0-63 in GSM networks) corresponding to the actual timing advance.

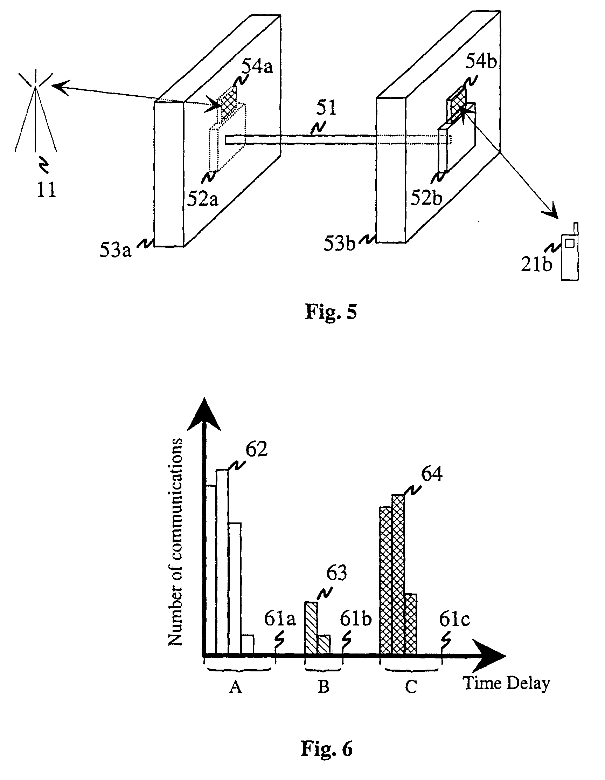

In the step 43 it is determined if the timing advance is greater that the maximum timing advance possible for a mobile station situated in the coverage area of the base station and communicating directly with the base station. In a microcell in a GSM network this can usually be done quite simply as the timing advance values for all mobile stations communicating directly with the base station are zero, thus simplifying the step 43 only to the checking of the timing advance value already calculated in step 42. If the timing advance value is greater than zero then the communication is judged in step 44 to be coming via a delay causing relay element, like a radio repeater. In some advantageous embodiments of the invention, even the identification of the relay elements is carried out in step 44 using the method to be described in context of fig.6.

If the timing advance value is equal to zero, it is concluded in step 49 that the mobile station is communicating directly with the base station.

When it has been concluded in step 44 that the communication is performed via a relay element, this information may be used in many different ways, some of which are included in the flow chart in fig. 4. In the step 45 it is determined if it has been detected before that there is a relay element in that particular cell. If there is no earlier indications about relay elemement in the said cell then in step 46 a notice informing about the presence of a relay element in said cell is sent to the network management system to be included to the data base.

After the notice has been sent in step 46 or if the presence of a relay element was already known, directly after step 45, it is checked in step 47 if there are any particular measurements to be carried out for the communications performed via a relay element. These measurements for example updating performance management counters such as dropped call ratio and hand over failures are then carried out in step 48.

In step 50 normal information processing is carried out for the bursts received in step 41, both for the bursts coming via the relay elementas for the bursts coming directly from the mobile station. After step 50 it is returned back to the step 41 for receiving a new burst.

The method described above is not limited only to the indoor or microcell use, but can also be used for example in macrocells if a maximum timing advance for a mobile station communicating directly with the base station can be found and a timing advance caused by a relay element is greater than this maximum timing advance. Then the limiting criteria in step 43 in fig. 4 is not limited to that the value is greater than zero, but greater than a some cell specific value.

In fig. 5 another communication relaying network element namely optical tunnelling configuration is shown. With optical tunnelling configuration a coverage area of a base station 11 can be extended to locations that cannot be readily covered with a simple radio repeater. Optical tunnelling configurations are used for example when a coverage area of a base station is extended into two separate buildings.

In optical tunnelling configuration communications between a mobile station 21b and a base station 11 is performed via two receiving/transceiver sections 54a and 54b, two electro-optical converters 52a and 52b, and via optical transfer means 51.

The first receiving/transceiver sections 54a relays communications between the base station 11 and the first electro-optical converter 52a. The first electro-optical converter 52a converts communications received by the first receiving/transceiver sections 54a to optical information and sends the optical information via optical transfers means 51 to the second electro-optical converter 52b. The second electro-optical converter 52b converts received optical information to electrical form and transfers it to the second receiving/transceiver section 54b relaying information to the mobile station 21b. Accordingly communications from the mobile station 21b is relayed via second receiving/transceiver section 54b and second electro-optical converter 52b to optical transfer means 51, where it is received by the first electro-optical converter 52a transferring the information to the first receiving/transceiver sections 54a and further to the base station 11.

Receiving/transceiver sections 54a and 54b and electro-optical converters 52a and 52b cause time delays for the communication between the mobile station 21b and the base station 11. Therefore the present invention can also be used for detection of optical tunnelling configurations.

In figure 6 an example of a distribution of communications in a cell as a function of time delay is shown. The cell has two different relaying elements.The first peak 62 in the distribution is caused by the communications performed directly with the base station. The second peak 63 is caused by the communications performed via the first relay element, for example radio repeater. The third peak 64 is caused by the communications performed via the second relay element, for example optical tunnelling configuration.

In figure 6 the maximum time delay 61a for a mobile station communicating directly with the base station is shorter than the minimum time delay caused by the relay elements. Therefore it can be concluded that communications with time delay in interval A in figure 6 are performed directly with the base station. The maximum time delays 61b and 61c for communications performed via the first and second relay elements are known and the minimum time delay for communication performed via the second relay element is longer that the maximum time delay 61b for communication performed via the first relay element. Therefore in can be concluded that communications having time delay within interval B are performed via the first relay element and those having time delay within interval C are performed via the second relay element.

If the distribution of communications as a function of delay times show a clear multipeak distribution, like in figure 6, the present invention can by used not only to identify that a communication is performed via a relay element, but also to identify the relay elements performing the communication. An analysis of possible time delay intervals for each particular cell should be carried out before making detailed identification of elements, so that the individual characteristics of each cell could be taken into account.

The present invention can also be used for detecting malfunctioning elements. This can be accomplished for example by storing an indication of the existence of a delay every time a delay causing relay element is detected in a cell. Using some monitoring means these indications can then be monitored. When enough time have been passed since a relay element was previously detected in a cell, a notice informing about a possible malfunction in a relay element in that cell can be sent to the operator.

The present invention is not limited only to the examples presented above, but can also be used to detect also any other kind of delay causing network elements. Furthermore the present invention is not limited only to the GSM network, but can be utilised in all kind of cellular communications networks, such as the UMTS network, where timing advance or similar methods are used to compensate the propagation time delays between a base station and a mobile station. Therefore the actual way of determining the timing advance is not relevant to the present invention.

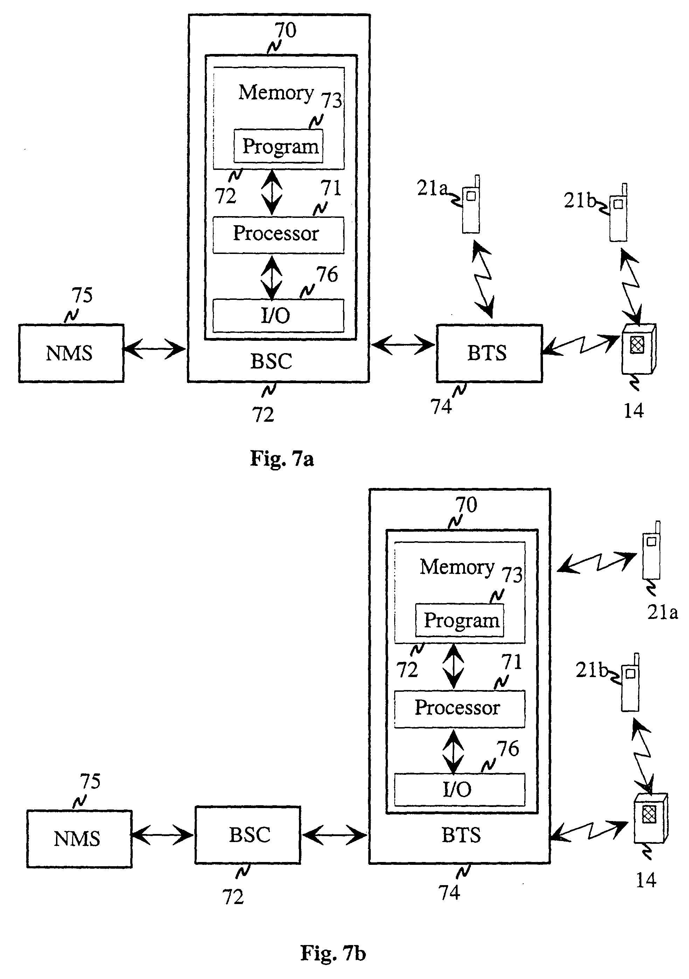

In fig 7a and 7b two embodiment of a system 70 according the present invention are shown. In figure 7a the system is placed in a Base Station Controller 72 and in 7b the system 70 is placed in a Base Transceiver Station 74. The system 70 has I/O-interface 76 via which the system can communicate with the Network Management system 75 and monitor communications between BTS 74 and mobile stations 21a and 21b. Communication time delays between BTS 74 and mobile stations 21a and 21b are monitored and different relay elements identified by the processor 71. The program 73 saved in the memory 72 is used to control processor 71 so that the relay causing network elements can be detected and possibly identified using the method according the present invention.

The name of a given functional entity, such as the base station controller, is often different in the context of different cellular telecommunication systems. For example, in the UMTS system the functional entity corresponding to a base station controller (BSC) is the radio network controller (RNC). Therefore, the particular terminology used to denote various functional entities in this specification are only examples according to the GSM system, and do not limit the invention in any way.

In view of the foregoing description it will be evident to a person skilled in the art that various modifications may be made within the scope of the invention. While a preferred embodiment of the invention has been described in detail, it should be apparent that many modifications and variations thereto are possible within the scope of the appended claims.

### REFERENCES:

[1] Michel Mouly, Marie-Bernadette Pautet: "The GSM System for Mobile Communications", ISBN 2-9507190-0-7, Palaiseau 1992.

## Claims

1. A method (40) for detecting network elements relaying communications between a base station and a mobile station in a cellular communication network, where time delays between base stations and mobile stations are monitored (42), **characterised by** that the communication relayed via at least one of the elements is detected (43) by the increase of time delay compared to the time delay of mobile stations communicating directly with the base station.

2. A method (40) according to claim 1, **characterised by** that the communication relaying elements are identified (44) on the ground of communication time delays.

3. A method (40) according to claim 1, **characterised by** that the timing advance value corresponding to the said time delay is calculated (42).

4. A method (40) according to claim 3, **characterised by** that the communications with timing advance values greater than some predetermined value are determined (43) to be relayed via at least one of the said elements.

5. A method (40) according to claim 4, **characterised by** that the said predetermined value is zero.

6. A method (40) according to claim 1, **characterised by** that the mobile communication network is a GSM network.

7. A method (40) according to claim 1, **characterised by** that when a presence of at least one of said elements is detected (45) for the first time, an event notice is sent (46) to a network management system.

8. A method (40) according to claim 1, **characterised by** that the time delay is monitored by a base transceiver station (BTS).

9. A method (40) according to claim 1, **characterised by** that the time delay is monitored by a base station controller (BSC).

10. A method (40) according to claim 1, **characterised by** that the communication relayed via at least one of said elements is monitored to determine various parameters giving information about the functioning of the network and said elements.

11. A method (40) according to claim 1, **characterised by** that at least one of said elements is a radio repeater.

12. A method (40) according to claim 1, **characterised by** that at least one of said elements is an optical tunnelling configuration.

13. A system (70) for detecting network elements (14) relaying communications between a base transceiver station (74) and a mobile station (21b) in cellular communication network, where time delays between base transceiver stations (74) and mobile stations (21a, 21b) are monitored, **characterised by** that the system (70) **has** means (71) for detecting communication relayed via at least one of the elements (14) by the increase of time delay compared to the time delays of mobile stations (21a) communicating directly with the base transceiver station (74).

14. A system (70) according to claim 13, **characterised by** that the system (70) has means (71) for identifying communication relaying elements on the grounds of the communication time delays.

15. A system (70) according to claim 13, **characterised by** that the mobile communication network is a GSM network.

16. A system (70) according to claim 13, **characterised by** that the system (70) has means (76) for sending an event notice to a network management system (75) when a presence of at least one of said elements (14) is detected for the first time.

17. A system (70) according to claim 13, **characterised by** that the system (70) has means (71) for carrying out measurements from the communication relayed via at least one of said elements (14).

18. A network element (72, 74) for receiving communications from a mobile station (21a, 21b) in a cellular communication network, **characterised by** that the element (72, 74) comprises a system (70) for identifying communication relaying elements (14; 54a, 54b) on the basis of the communication time delays.

19. A network element (72, 74) according to claim 18, **characterised by** that the network element is a base transceiver station (BTS) (74).

20. A network element (72, 74) according to claim 18, **characterised by** that the network element is a base station controller (BSC) (72).

## Patentansprüche

1. Verfahren (40) zum Erfassen von Netzwerkelementen, die Kommunikationen zwischen einer Basisstation und einer Mobilstation in einem zellularen Kommunikationsnetzwerk weiterleiten, wobei Zeitverzögerungen zwischen Basisstationen und Mobilstationen überwacht werden (42), **dadurch gekennzeichnet, dass** die über zumindest eines der Elemente weitergeleitete Kommunikation mittels des Zeitverzögerungsanstiegs im Vergleich zu der Zeitverzögerung von Mobilstationen, die direkt mit der Basisstation kommunizieren, erfasst wird (43).

2. Verfahren (40) nach Anspruch 1, **dadurch gekennzeichnet, dass** die Kommunikationsweiterleitungs-Elemente auf der Grundlage von Kommunikationszeitverzögerungen identifiziert werden (44).

3. Verfahren (40) nach Anspruch 1, **dadurch gekennzeichnet, dass** ein der Zeitverzögerung entsprechender Zeitsteuerungskorrekturwert berechnet wird (42).

4. Verfahren (40) nach Anspruch 3, **dadurch gekennzeichnet, dass** die Kommunikationen mit Zeitsteuerungskorrekturwerten, die größer als ein vorbestimmter Wert sind, als über zumindest eines der Elemente weitergeleitet bestimmt werden (43).

5. Verfahren (40) nach Anspruch 4, **dadurch gekennzeichnet, dass** der vorbestimmte Wert Null ist.

6. Verfahren (40) nach Anspruch 1, **dadurch gekennzeichnet, dass** das Mobilkommunikationsnetzwerk ein GSM-Netzwerk ist.

7. Verfahren (40) nach Anspruch 1, **dadurch gekennzeichnet, dass** bei einer erstmaligen Erfassung (45) eines Vorhandenseins zumindest eines der Elemente eine Ereignisbenachrichtigung zu einem Netzwerkverwaltungssystem gesendet wird (46).

8. Verfahren (40) nach Anspruch 1, **dadurch gekennzeichnet, dass** die Zeitverzögerung durch eine Basis-Sende-/Empfangsstation (BTS) überwacht wird.

9. Verfahren (40) nach Anspruch 1, **dadurch gekennzeichnet, dass** die Zeitverzögerung durch eine Basisstationssteuervorrichtung (BSC) überwacht wird.

10. Verfahren (40) nach Anspruch 1, **dadurch gekennzeichnet, dass** die über zumindest eines der Elemente weitergeleitete Kommunikation überwacht wird, um verschiedene Parameter zu bestimmen, die Informationen über die Funktionsweise des Netzwerks und der Elemente angeben.

11. Verfahren (40) nach Anspruch 1, **dadurch gekennzeichnet, dass** zumindest eines der Elemente eine Funkrelaisvorrichtung ist.

12. Verfahren (40) nach Anspruch 1, **dadurch gekennzeichnet, dass** zumindest eines der Elemente eine optische Durchtunnelung-Anordnung ist.

13. System (70) zur Erfassung von Netzwerkelementen (14), die Kommunikationen zwischen einer Basis-Sende-/Empfangsstation (74) und einer Mobilstation (21b) in einem zellularen Kommunikationsnetzwerk weiterleiten, wobei Zeitverzögerungen zwischen Basis-Sende-/Empfangsstationen (74) und Mobilstationen (21a, 21b) überwacht werden (42), **dadurch gekennzeichnet, dass** das System (70) eine Einrichtung (71) zur Erfassung einer über zumindest eines der Elemente (14) weitergeleiteten Kommunikation mittels des Zeitverzögerungsanstiegs im Vergleich zu den Zeitverzögerungen von Mobilstationen (21a), die direkt mit der Basis-Sende-/Empfangsstation (74) kommunizieren, aufweist.

14. System (70) nach Anspruch 13, **dadurch gekennzeichnet, dass** das System (70) eine Einrichtung (71) zur Identifikation von Kommunikationsweiterleitungs-Elementen auf der Grundlage der Kommunikationszeitverzögerungen aufweist.

15. System (70) nach Anspruch 13, **dadurch gekennzeichnet, dass** das Mobilkommunikationsnetzwerk ein GSM-Netzwerk ist.

16. System (70) nach Anspruch 13, **dadurch gekennzeichnet, dass** das System (70) eine Einrichtung (76) zum Senden einer Ereignisbenachrichtigung zu einem Netzwerkverwaltungssystem (75) bei einer erstmaligen Erfassung (45) eines Vorhandenseins zumindest eines der Elemente (14) aufweist

17. System (70) nach Anspruch 13, **dadurch gekennzeichnet, dass** das System (70) eine Einrichtung (71) zur Ausführung von Messungen von der über zumindest eines der Elemente (14) weitergeleiteten Kommunikation aufweist.

18. Netzwerkelement (72, 74) zum Empfangen von Kommunikationen von einer Mobilstation (21a, 21b) in einem zellularen Kommunikationsnetzwerk, **dadurch gekennzeichnet, dass** das Element (72, 74) ein System (70) zur Identifikation von Kommunikationsweiterleitungs-Elementen (14; 54a, 54b) auf der Grundlage der Kommunikationszeitverzögerungen umfasst.

19. Netzwerkelement (72, 74) nach Anspruch 18, **dadurch gekennzeichnet, dass** das Netzwerkelement eine Basis-Sende-/Empfangsstation (BTS) (74) ist.

20. Netzwerkelement (72, 74) nach Anspruch 18, **dadurch gekennzeichnet, dass** das Netzwerkelement eine Basisstationssteuervorrichtung (BSC) (72) ist.

## Revendications

1. Procédé (40) pour détecter des éléments de réseau relayant des communications entre une station de base et un terminal radio dans un réseau de communication cellulaire, où des temps de retard entre les stations de base et les terminaux radio sont contrôlés (42),
**caractérisé en ce que** la communication relayée par l'intermédiaire d'au moins un des éléments est détectée (43) par l'augmentation du temps de retard comparée au temps de retard des terminaux radio communiquant directement avec la station de base.

2. Procédé (40) selon la revendication 1,
**caractérisé en ce que** des éléments relayant la communication sont identifiés (44) sur la base des temps de retard de communication.

3. Procédé (40) selon la revendication 1,
**caractérisé en ce que** la valeur de l'avance de synchronisation correspondant audit temps de retard est calculée (42).

4. Procédé (40) selon la revendication 3,
**caractérisé en ce que** les communications avec des valeurs d'avance de synchronisation plus grandes qu'une certaine valeur prédéfinie sont déterminées (43) à être relayées par l'intermédiaire d'au moins un desdits éléments.

5. Procédé (40) selon la revendication 4,
**caractérisé en ce que** ladite valeur prédéfinie est zéro.

6. Procédé (40) selon la revendication 1,
**caractérisé en ce que** le réseau de communication mobile est un réseau GSM.

7. Procédé (40) selon la revendication 1,
**caractérisé en ce que** lorsqu'une présence d'au moins un desdits éléments est détectée (45) pour la première fois, une instruction d'événement est envoyée (46) à un système de gestion de réseau.

8. Procédé (40) selon la revendication 1,
**caractérisé en ce que** le temps de retard est contrôlé par une station de base émetteur-récepteur (BTS).

9. Procédé (40) selon la revendication 1,
**caractérisé en ce que** le temps de retard est contrôlé par un contrôleur de station de base (BSC).

10. Procédé (40) selon la revendication 1,
**caractérisé en ce que** la communication relayée par l'intermédiaire d'au moins un desdits éléments est contrôlée pour déterminer divers paramètres fournissant des informations sur le fonctionnement du réseau et desdits éléments.

11. Procédé (40) selon la revendication 1,
**caractérisé en ce que** au moins un desdits éléments est un répéteur radio.

12. Procédé (40) selon la revendication 1,
**caractérisé en ce qu'**au moins un desdits éléments est une configuration de type passerelle optique.

13. Dispositif (70) pour détecter des éléments de réseau (14) relayant des communications entre une station de base émetteur-récepteur (74) et un terminal radio (21b) dans un réseau de communication cellulaire, où des temps de retard entre les stations de base émetteur-récepteur (74) et les terminaux radio (2 la, 21b) sont contrôlés,
**caractérisé en ce que** le dispositif (70) possède des moyens (71) pour détecter la communication relayée par l'intermédiaire d'au moins un des éléments (14) par l'augmentation du temps de retard comparée aux temps de retard des terminaux radio (21a) communiquant directement avec la station de base émetteur-récepteur (74).

14. Dispositif (70) selon la revendication 13,
**caractérisé en ce que** le dispositif (70) possède des moyens (71) pour identifier la communication relayée par des éléments sur la base des temps de retard de la communication.

15. Dispositif (70) selon la revendication 13,
**caractérisé en ce que** le réseau de communication mobile est un réseau GSM.

16. Dispositif (70) selon la revendication 13,
**caractérisé en ce que** le système (70) possède des moyens (76) pour envoyer une instruction d'événement à un système de gestion de réseau (75) lorsqu'une présence d'au moins un desdits éléments (14) est détectée pour la première fois.

17. Dispositif (70) selon la revendication 13,
**caractérisé en ce que** le système (70) possède des moyens (71) pour traiter des mesures en provenance de la communication relayée par l'intermédiaire d'au moins un desdits éléments (14).

18. Elément de réseau (72, 74) pour recevoir des communications d'un terminal radio (21a, 21b) dans un réseau de communication cellulaire,
**caractérisé en ce que** l'élément (72, 74) comprend un système (70) pour identifier la communication relayée par les éléments (14; 54a, 54b) sur la base des temps de retard de communication.

19. Elément de réseau (72, 74) selon la revendication 18,
**caractérisé en ce que** l'élément de réseau est une station de base émetteur-récepteur (BTS) (74).

20. Elément de réseau (72, 74) selon la revendication 18,
**caractérisé en ce que** l'élément de réseau est un contrôleur de station de base (BSC) (72).
